# EUROPEAN PATENT APPLICATION

(11) **EP 1 777 918 A2**
(43) Date of publication of application: **25.04.2007**
(21) Application number: 06076907.2
(22) Date of filing: 20.10.2006
(51) Int. Cl.: H04L 29/12, H04L 12/24

(54) **Communication node, server and system**

(30) Priority: 24.10.2005 JP 2005308093; 14.05.2006 JP 2006134591
(71) Applicant: Fukushima, Hajime, Tokyo 165-0027 (JP)
(72) Inventor: Fukushima, Hajime, Tokyo 165-0027 (JP)
(74) Representative: Van Straaten, Joop

(57) **Abstract**

The originator is made to discover the communication node specified by the receiver as the destination following the movement of the receiver among the communication nodes.

## Description

### Field of the invention

The present invention expands the destination discovering process in a network. The network may be either a store-and-forward network or a line switching network.

In particular, the present invention belongs to a technology for discovering a single destination by specifying one communication node among more than 1 communication nodes the receiver has in a network where reachability to a destination communication node is obtained by associating quasi destination information used by the sender for specifying destination with information identifying the actual destination which is used by the receiver for specifying the communication node.

### Background Art

Communication which reaches oneself from others with a physical movement of a person is wanted here. Currently, an approach for realizing this with a single mobile communication node such as a mobile phone, PDA or others is adopted on the premise that these are carried around by persons. These communication nodes were of no use under circumstances where radio waves cannot be received.

In addition, these were used for dialing up laptop PC and others from the destination hotel. In this case, it could not be received while moving.

In this way, root cause of hardness in use is a prejudice that communication for reaching a moving person must be received with a single communication node moving with the person.

At the same time, terminals used by general users after the commercialization of the Internet had dynamically assigned addresses and did not have any identifier for specifying the communication end. There were requests for communication with these terminals. First, an attempt to set an identifier for uniquely specifying the communication end and to entrust a system where the dynamically assigned addresses follows to specify the communication end was made. These kinds of systems are, for example, webhop, IMPP (RFC2778, RFC2779), dynamic DNS (RFC2136, RFC3007), SIP (RFC3261-3265, RFC3856), ENUM (RFC2916, RFC3401-3406, RFC3761) and so on. Furthermore, as a system for following dynamically assigned addresses with respect to static address IP Mobility (RFC3344, RFC3375, RFC3963) is available. In addition, there are HLR (home location register) of a cellular phone and so on in a line switching network (these are collectively referred to "destination discovering server" hereinafter).

### Problem to be Solved by the Invention

Means for hopping the receiving communication node is provided following the receiver moving among a plurality of communication nodes, not received by a single communication node.

Most plainly speaking, a communication node near the receiver or a communication node specified by the receiver is discovered (received) as a destination.

That is to say, following the movement among hosts of the receiver, the communication node specified by the receiver is discovered as a destination by the originator.

### Effect of Invention

1. A carrying-type communication node is of no use under environment with low-quality radio waves. However, other communication nodes where wired or wireless is low-layered can receive under such environment.
2. The communication node actually not discovered cooperates to maintain the location of the communication node actually discovered by an autonomous operation of each communication node for coordinating the communication node which can be discovered as destination.
   In other words, when there is an actually discovered communication node, other communication nodes suppress control of the destination discovering process of the other communication nodes. In this way, manual control of the destination discovering process is a reflection of the originating intention for the first time, because, if the communication node for controlling the destination discovering process is not automatically suppressed, the manual control is overwritten by automatic control of the destination discovering process by the other communication nodes.
3. In the present invention, the network address associated with a static identifier will always be dynamic by hopping of the communication node associated with the static identifier, even if a communication node with a permanently assigned network address is included in the group. By this way the communication node with a permanently assigned network address and the communication node with a dynamically assigned address may be handled integrally.
4. Scalable. In a communication node group which can be discovered as a destination, the destination discovering process based on the originating intention of the receiver was enabled to be provided without depending on the number of the communication nodes comprised in the group, regardless of whether the number of the communication nodes increased/decreased. In this way, communication nodes are free to be added behind the first communication node, even if it is single.
5. Small system. A model with a central computer is called a "god model". Conventionally, a network was designed with an origin of imagination that the destination discovering server rules like god. This realizes a great social system. Multix already failed. In the present invention, the destination discovering server 30 is not god. The present invention succeeded in returning the locating of the destination discovering server to the original one for simply providing service. Customers hope for environments where they can control by themselves.
6. Able to small start. It is already operable, if only closed in a group.
7. In the present invention, the destination discovering server does not need to be changed in principle.
8. In the present invention, the problem can be solved using the original communication node without changing anything about the originator communication node.
9. The communication node now discovered as the destination does not need to previously know the communication node which is to be used next by the receiver. This is the same with the destination discovering server.

### Summary of the invention

A receiver makes a communication to be sent as an address from the originator communication node to a communication node which the receiver desires.

The followings are specific ideas to realize this:
1. The desired communication node of the receiver is discovered by controlling the destination discovering process as means for the communication node used by the receiver to receive communications from others.
2. Here, first communication nodes desired to be discovered as destinations are grouped as a communication node group which can be the first communication node 10 within the moving range or the desired range of the receiver. This group may be geographically distributed and the network addresses may be distributed.
3. Competitions for positions being discovered as destinations occur among each communication node in the communication node group comprising the first communication nodes 10.
   Here, from the feature of the network, the communication node which is not discovered as the destination at that point cannot be discovered by other communication nodes. The communication node group comprising the first communication nodes 10 is no exception.
4. The above competition is adjusted by the result of the communication between the only communication node discovered and the communication node which cannot be discovered at the same point in time.

That is to say, the autonomous behavior of each of the communication node is implemented as follows.

The case controlling/not controlling the destination discovering process is switched by the external environment detected by an external environment detecting section.

### Brief description of the drawings

Fig. 1 is a block diagram of the entire network.
Fig. 2 is a block diagram of the communication node which can be the first communication node 10.
Fig. 3 is a flowchart showing the operation of the communication node which can be the first communication node 10.
Fig. 4 is a block diagram of the communication node which can be the first communication node 10 relating to embodiment 2.
Fig. 5 is a flowchart showing the operation of the communication node which can be the first communication node 10 relating to embodiment 2.
Fig. 6 is a flowchart showing the case of maintaining.
Fig. 7 is a flowchart showing how the first communication node 10 operates with a trigger of the change in the network address of the own node.
Fig. 8 is a flowchart showing the operation of the communication node which can be the first communication node 10 deforming embodiment 1.
Fig. 9 is a time chart showing the transition of the condition among the destination discovering server 30, the PC 11 which is the communication node which can be the first communication node 10 and the automobile 13.
Fig. 10 is a flowchart showing the operation at the start-up of the communication node which can be the first communication node 10.
Fig. 11 is a block diagram of the communication node which can be the first communication node 10 relating to the example application.
Fig. 12 is a flowchart showing the operation of the communication node which can be the first communication node 10 relating to the example application.
Fig. 13 is a diagram showing the practical application.

### Detailed Description of the Preferred Embodiment

The present invention will be described based on attached figures hereinafter. Parts with the same functions are assigned with the same signs in each figure. The following embodiments are not limitations but examples.

The contents disclosed in Japanese Patent Applications No. 2005-308093 and No. 2006-134591 filed by the inventor and applicant of the present application as well as not yet publicized when the present application was filed are incorporated into this application.

### (Block diagram of the entire network)

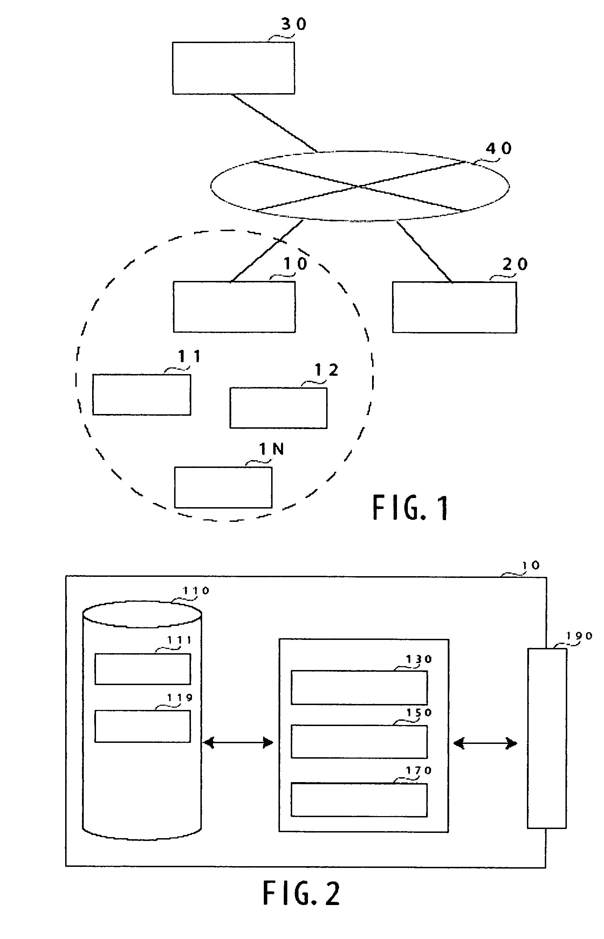

Fig. 1 is a block diagram showing the entire network in the present invention. In Fig. 1, a first communication node 10, a second communication node 20 and a destination discovering server 30 for returning (or proxy mediating) a network address of the first communication node 10 replying to the inquiry from the communication node show interconnection through a network 40 of the Internet and others.

### (Terms)

Quasi destination information is information showing a destination recognized by an originator before entering the destination discovering process. A static identifier is an example of the quasi destination information (abbreviated hereinafter as "quasi destination").

A static identifier is an object when the destination is discovered. This is usually used by the originator for specifying the destination communication node on the network. Specific examples of the static identifier include handle name, body name, host name, phone number, URI and so on.

For this reason, what the receiver of the first communication node 10 previously notifies for the originator is a typical of a static identifier. For example, what the person who desires to be called tells as his/her phone number is the example.

Actual destination information (abbreviated as "actual destination" hereinafter) is information used by the network for specifying the communication node used by the receiver. The network address is a typical of the actual destination.

Network address indicates the network address on the network which conducts the actual access for the communication node.

Network address in this case is a destination conducting arrival to the actual communication node which is able to recognize the originator for the first time after the destination is discovered. In case it is connected by proxy mediation, the network sets up to connection or others, the second communication node 20 need not know the network address of the first communication node 10. In this case, the connection may be considered as a discovery. The actual destination does not always need to be the network address, but it may be information showing the base station area of the first communication node 10 or information comprising a plurality of parameters.

Both the quasi destination and the actual destination are information for identifying the first communication node 10.

By the way, the quasi destination and the actual destination may be based on the same expression system.

For example, the quasi destination is a phone number and the actual destination is also a phone number. They may be IP addresses. Thus, the network address may belong to the quasi destination. In this case, the quasi address and the actual address are allowed to be the same value.

The destination discovering server 30 maintains mapping. Mapped contents are generally the quasi destination and the actual destination, though those may also be intermediate information. For example, there are string rewriting rule and others in ENUM.

The destination discovering server 30 connects (the second communication node 20 and the first communication node 10) by functionally announcing said maintained mapping or proxy mediation based on the mapping, though these function are not necessary for the destination discovering server 30 and the network may be a substitute. The destination discovering server 30 may be a system comprising a plurality of servers.

The destination discovering server 30 may be adapted to the communication system of the present invention without any principle change.

However, for example, in cases where information and others for individually identifying the communication node are previously set in the destination discovering server 30 which does not comply with any update request from the communication node different from the communication node relating to these information and others and said individually identifying information is not secured for one communication node, the destination discovering server 30 cannot be adopted for the communication system of the present invention without modification.

In this case, to modify the destination discovering server 30 to comply with updating requests from more than 2 communication nodes is to invent a new destination discovering server 30 for applying to the present invention, which is the execution of the present invention.

The second communication node 20 is a communication node used by one who intends to start a communication. It is an originator communication node.

The destination discovering process of the second communication node 20 includes the following cases and others:
- the destination discovering server 30 announces the mapping to which the second communication node 20 directly refers,
- the network refers to the destination discovering server 30 by proxy,
- the destination discovering server 30 mediates the connection (between the second communication node 20 and the first communication node 10) (in case there is a hidden true destination ahead of the IMPP server which is set as a superficial destination, and so on.) or
- the network proxy mediates to connection (including cases where home agent intercepts when using cellular phone or IP mobility - in these cases, the originator may not notice the transfer).
Which one to use for discovering the destination depends on types of the destination discovering server 30.

The destination discovering process may be developed in multistage. In addition, it may be a mapping in any stage.

The first communication node 10 is a communication node discovered by the quasi destination (for example, the static identifier specified as a communication end by the originator at the start of a communication.). Connection may be included in discovery. In case the second communication node 20 is connected without knowing the network address and others of the first communication node 10, realization of connection between both of the nodes (by mediation and others) is equivalent to discovery as a result. That is to say, the first communication node 10 is the destination for the originator.

The first communication node 10 and the second communication node 20 may be any type of communication nodes. For example, the communication nodes may include not only mobile phones (including only SIM card), PCs, PDAs or others, but also complex products such as automobile equipments such as car navigation systems or automobiles themselves. In addition, it may belong to any types of networks and relations. The communication nodes in the present specification indicate those used by users. That is to say, devices operated by network operators are not included. This is generally called edge node or end point. In case the first communication node 10 is inside a firewall or others, reach and connection by port forwarding and others from the network boundary are included.

The originating intention of the receiver of the first communication node 10 is to determine (to select the communication node for discovery) which communication to discover by the communication node 20 among the communication nodes which are desired to be discovered as destinations. This originating intention may be not only a clearly identified originating intention but also an originating intention which is not a clear indication by automation or others. In case of the clearly identified originating intention, preventing the communication node from existing on the network or preventing it from being discovered as the destination are included.

There are communication nodes which can be discovered as the destinations in the future but not discovered at present behind the first communication node 10. (11, 12 and 1N in Fig. 1)

These communication nodes are normal communication nodes which can only send and cannot receive in general, i.e. similar to public phones or browsing terminals. This is same as "terminals used by general users after the commercialization of the Internet" described in "Background Art".

At the same time, the first communication node 10 is a single communication node for the second communication node 20. The second communication node 20 cannot know about the communication node behind the first communication node 10. Furthermore, the second communication node 20 usually does not individually recognize the first communication node 10. That is to say, the second communication node 20 cannot know that the first communication node 10 switched locations with the communication node behind it in general. The first communication node 10 is simply a discovered communication node for the second communication node 20. Therefore, the owner of the second communication node 20 may receive an unintended response as a result of the communication between the first communicate node 10. For example, though one expected a web page to be displayed, it was not displayed, and so on. However, this is acceptable because, even if web servers are provided to most of the communication nodes which are to be discovered by the receiver of the first communication node 10, this may be applied only when communication nodes which do not provide web servers are included in the group.

Here, in case there are only the actually discovered communication nodes but no actually not discovered communication nodes in the communication node group comprising the first communication node 10, if the network address of the first communication node 10 changed, the destination discovery of the second communication node 20 will fail unless the destination discovering process is controlled by the first communication node 10. That is to say, it will reach a false destination. However, the first communication node 10 exists as a communication node. Thus, the discovery as the destination and the existence of the first communication node 10 or the communication node behind it are unrelated.

The first communication node 10 plays a role of being discovered as the destination among actual nodes (for example, PC 11, PC 12, automobile 13 and so on) used by the same receiver.

Therefore, the first communication node 10 is dealt as described below in the present specification.

The first communication node 10 indicates the actually discovered communication node. (However, a misidentified communication node may be discovered, or, the discovered communication node may not exist. In these cases, it is considered from the viewpoint whether the discovered communication node is correct or incorrect as the first communication node 10.)

There are more than 0 communication nodes actually not discovered behind the first communication node 10.

This is a concept including the actually discovered communication nodes and actually not discovered communication nodes with no distinction, and, they are the communication nodes which can be the first communication nodes 10 when seen as a single communication node. The communication nodes which can be the first communication nodes 10 may be geographically distributed and the network addresses may be distributed.

A group is an assembly of communication nodes which can be the first communication nodes 10. Here, the group indicates a gathering which can be complied and named by species in logic, i.e. common features. However, the number of individuals comprised in the assembly may be more than 1. Thus, the group comprises more than 1 communication nodes.

Followings are descriptions of the communication nodes which can be the first communication nodes 10.

### (Embodiment 1)

The standard condition in controlling the destination discovering process is the control of the destination discovering process by a single first communication node 10. This is also a conventional example.

Here, the control of the destination discovering process indicates preventing discovery of incorrect destination by maintaining the mapping (for example, the actual destination associated with the quasi destination) stored in the destination discovering server 30 as latest and correct information. It indicates the updating described below, in particular.

Here, in case a group comprises of a plurality of communication nodes, competitions occur.

Consequently, to reflect the originating intention of the receiver to the network, the autonomous operation for each of the communication node to cooperate is described below.

Fig. 2 is a block diagram showing the internal composition of the communication node which can be the first communication node 10. A storage device 110 including a temporary storage for working, an external environment detecting section 130, a switching section 150, an updating section 170 and a physical communication interface 190 for connecting to a network 40 are shown in Fig. 2.

The storage device 110 includes a static identifier storage section 111 and a work area 119.

The static identifier storage section 111 stores static identifiers as examples of the quasi destinations used by the second communication nodes 20 for discovering the first communication nodes 10.

The work area 119 is a temporary storage for work. No mention of the work area 119 is made hereinafter.

The external environment detecting section 130 plays the role of a sensor which is a receptor.

That is to say, the external environment detecting section 130 detects the condition of the network which is the external environment around the own node.

### (Content of Detection)

The external environment detecting section 130 detects the location of the own node in the network using the content stored in the static identifier storage section 111. (Terms such as network address and location indicate network addresses and locations on networks if not otherwise specified.) This is because the location of the own node also change transitively (with the change of the network) as long as the network itself changes.

Whether the own node is the first communication node 10 or not is determined by what is maintained as the mapping as the actual destination (or intermediate information) associated with a certain quasi destination stored in the destination discovering server 30.

Even if an individual communication node is one constituent for the entire network, the network itself is an external environment for an individual communication node.

3 types of external environments to be detected are shown below.
(a) The own node is the first communication node 10 or
(b) Nodes other than the own node are the first communication nodes 10 or
(c) The first communication nodes 10 do not exist.

### (Action)

The updating section 170 plays the role of taking actions which is an effecter.

The content of the action is to approach to the external environment. To approach to the external environment is to control the destination discovering process in particular.

Furthermore, control of the destination discovering process is to control which node to be discovered as the first communication node 10 by the second communication node 20 among the communication nodes which can be the first communication nodes 10 by directly/indirectly updating the destination discovering server 30 in particular.

Updating (also called as registering, refreshing, logon and so on) is to send an instruction to rewrite sets of values which the first communication node 10 is mapped (also called bound and others) to the destination discovering server 30. This instruction may be indirect. Updating generally needs authentication. Updating includes "location registration". The first communication node 10 sending instructions (for example, keep alive) and others for simply maintaining mapping pair to the destination discovering server 30 is included in a broad sense. (The followings are 2 examples of the indirect updating. For example, in IP Mobility, there are cases when a mobile node updates a foreign agent and the foreign agent updates a home agent, and other cases. The home agent is the address discovering server 30. For example, in a cellular phone, in case a communication node registers its location in the base station when the communication node moved across the location registration area, there are cases when the network updates the HLR, and other cases. Location in case of a cellular phone is at once a physical location and the updating location on routing in the network. Indirect updating is naturally included in updating.)

Method for updating depends on the kind of the destination discovering server 30.

When there are more than 2 communication nodes which can be the first communication nodes 10, the actually not discovered communication nodes exist. In this case, the communication nodes discovered as the destinations can be applied to the own nodes (i.e. the communication nodes which were actually not discovered before the updating) by updating of the actually not discovered communication nodes.

### (Content of Coordination)

The area surrounded by a circle including the first communication node 10 in Fig. 1 is the group. Which communication node in the group obtains the control authority of the destination discovering process is coordinated.

As a result of the coordination, each of the communication nodes which can be the first communication node 10 provides the correct destination discovering process to the second communication node 20 as a unit without competing as a whole.

The basic idea is that the above coordination is realized by the autonomous operation of each of the communication node which can be the first communication node 10.

While coordination is performed among the communication nodes, autonomy is performed inside the communication nodes. Autonomy is implementation for coordination.

### (Content of Autonomy)

Autonomy is a function for working on to maintain a correct condition, i.e. homeostasis.

Here, there cannot be a correct condition for a single own node (Granted that there is such a condition, it is not taken up here.), so it indicates a condition where the originating intention of the receiver (i.e. a determination for which of the communication node to be discovered as the destination) is reflected.

Means for realizing constancy is feedback.

There are 2 systems in the present invention.

A first system comprises the second communication node 20, the destination discovering server 30 and the first communication node 10.

A second system comprises the destination discovering server 30 and a single or a plurality of the communication nodes which can be the first communication nodes 10 (i.e. at least the actually discovered communication node with or without the actually not discovered communication node). That is to say, the second system comprises the group added with the destination discovering server 30.

The largest difference between the first and the second systems is the beneficiaries. The first system is for one who intends to start a communication. This is a conventional model.

The second system is proposed by the present invention, which is a system for reflecting the originating intention of the receiver. Furthermore, the second system comprises a feedback group

There are 2 feedbacks. One is coordination as a result of working on the external environment, which is the feedback group. The another one is autonomy.

That is to say, to comprise a feedback for reflecting the result of the detection of the external environment to the behavior of the own node is autonomy.

Autonomy is by stimulation (also called reception) and reaction model.

The updating section 170 reacts as working on the external environment as a stimulation of the detection of the external environment by the external environment detecting section 130. Here, the switching section 150 judges the detected content and determines whether to be reacted by the updating section 170 or not.

The switching section 150 judges and branches based on the detected result of the external environment detecting section.

The switching section 150 switches on/off of the updating section 170 based on the result of the branching.

The concept of switching may be considered as selectively performing operation which is able to express start-up, connection, delivery, call and so on to the updating section 170.

Consequently, the switching section 150 is also for control as well as the updating section 170. The difference between the updating section 170 and the switching section 150 is that, while the updating section 170 works on the external environment (i.e. controlling the destination discovering process), the switching section 150 controls the operation of the own node.

That is to say, the switching section 150 realizes autonomy.

### (Control Authority)

Control authority is a logical concept used for coordinating the competitions.

The control authority indicates which of the communication node among the communication nodes which can be the first communication nodes 10 has the authority of working on the network (i.e. the external environment for the communication nodes).

That is to say, it judges whether each of the communication node has the control authority for the own node or not.

A specific example is shown in Table 1.

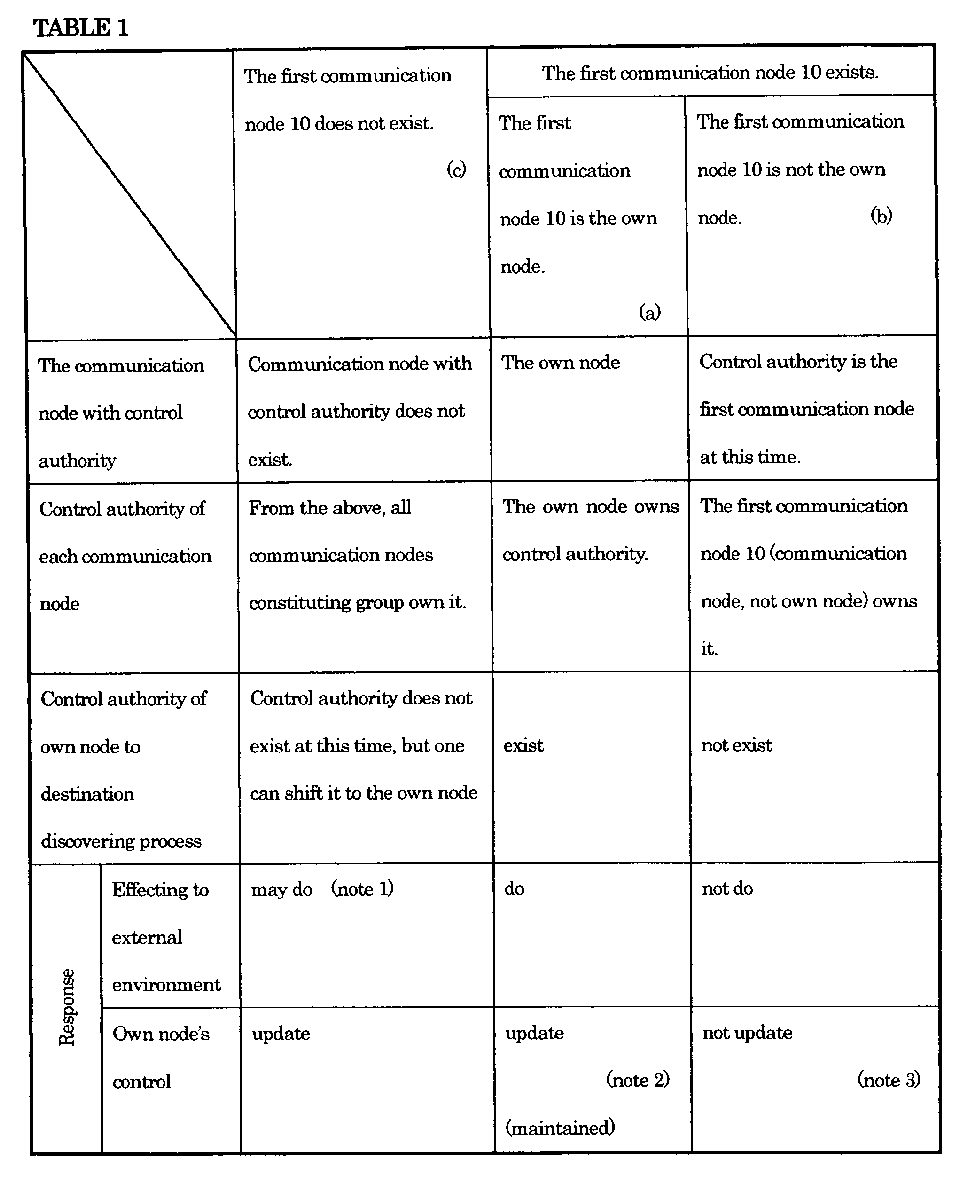

### Note 1 in Table 1,

There is no element preventing the own node from controlling the destination discovering process, so the own node spontaneously controls as a result

### Note 2,

"Update" and "maintain" are used in the same meaning here. In case "the first communication node 10 is the own node", it is not changed at all for the second communication node 20 even if it is updated again, as described below in detail.

### Note 3,

Controlling by not updating is performed as a control of the own node. That is to say, not working on the external environment or giving up.

Conventionally, it was based on a single communication node, so it was updated without fail, though there is much point in not updating here.

In this way, the switching section 150 judges whether the own node has the control authority to the destination discovering process or not. In case it has the control authority, it controls the own node by conventionally "update" and in case it does not have the control authority, it controls the own node by "not update" as proposed for the first time in the present invention.

The control of the own node belongs to autonomy and the control of the destination discovering process belongs to coordination. The control of the destination discovering process is the object itself.

Thus, the content which the switching section 150 should judge is whether there is any first communication node 10 other than the own node or not.

For example, in case there is a first communication node 10 other than the own node, the own node will not have the control authority. Therefore, the own node is not updated.

Here, the communication node with the control authority is the first communication node 10 (not the own node) which is the actually discovered communication node.

In this way, each of the communication nodes coordinates as a group by behaving autonomously.

### (Flowchart)

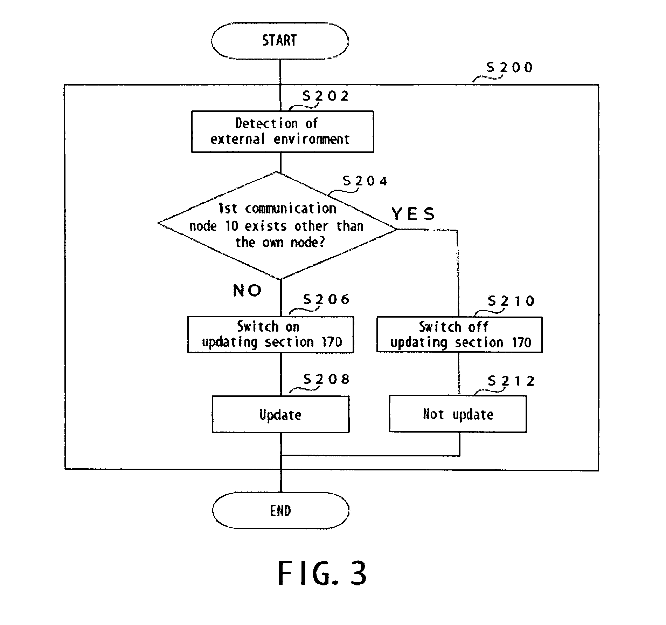

A flowchart of the communication node which can be the first communication node 10 is shown in Fig. 3.

In step S202, the external environment detecting section 130 detects the external environment for each of the communication node which can be the first communication node 10.

In step S204, whether switching is performed or not is judged based on the detected result in step S202 and branched. That is to say, the switching section 150 judges whether the own node has the control authority to the destination discovering process or not.

The detected result in step S202 which is trigger is whether any "first communication node 10 exists other than the own node" or not as already described.

The flowchart in Fig. 3 is equally executed whether the communication node is the actually discovered communication node or the actually not discovered communication node among the communication nodes which can be the first communication nodes 10. For example, in case the first communication node 10 (i.e. the actually discovered communication node) is a PC 12 in a certain point, in case a PC 11 detects the external environment, that "the first communication node 10 exists other than the own node" is already detected because the own node is the PC 11. On the contrary, in case the PC 12 executes, the first communication node 10 is detected as the own node because the PC 12 is the first communication node 10 itself.

For example, the destination discovering process provided by the destination discovering server 30 can be manually controlled. The manual control of the destination discovering process is one of explicit methods for reflecting the originating intention of the receiver.

Here, the manual control of the destination discovering process indicates directly/indirectly updating the destination discovering server 30 by tracking changes in the network addresses ("automatic updating" hereinafter).

In case of merely updating at regular time intervals, even if the network addresses changed during the waiting time, the changes in the network addresses is reflected to the next updating, so it is included in tracking the changes in the network addresses.

The manual control of the destination discovering process indicates the control of the destination discovering process based on the originating intention of the receiver ("manual updating" hereinafter).

The manual updating is based on the originating intention of the receiver, so the first updating in case the conventional automatic updating program is started is included in the manual updating. Thus, in case the communication node is set so that the automatic updating program is started at the start-up of the communication node, the first updating is the manual updating when there is any origination intention at start-up.

By the way, the manual updating is not always correct. If there is any conventional communication node ("automatic updating node" hereinafter) which controls the destination discovering process by tracking the changes in the network addresses, the manual control of the destination discovering process is overwritten by the automatic updating node. In case there is a plurality of automatic updating nodes, they are overwritten by each other. That is to say, the problem in the conventional automatic updating is that it cannot cooperate. Consequently, each of the communication nodes which can be the first communication node 10 may be autonomous as described below.

In step S204, the switching section 150 judges and branches based on the detected result of the external environment by the external environment detecting section 130.

If "the existence of the first communication node 10 (i.e. the actually discovered node) other than the own node" is detected, it branches to step S210, and, if not, it goes on to step S206.

In step S206, the switching section 150 switches on the updating section 170.

In step S208, the updating section 170 directly/indirectly updates the destination discovering server 30. That is to say, this is the case when the communication node works on the external environment. In case the communication node is the first communication node 10, the discovered destination for the second communication node 20 is maintained as the own node by updating. In case there is no first communication node 10, the own node is turned to the destination by updating.

In step 210, the switching section 150 switches off the updating section 170.

Step S212 is a logical step which clearly specifies that updating is not performed. That is to say, the communication node does not work on the external environment (for example, when the address of the own node changed). It has a feature that the updating which was conventionally performed without fail is not performed. In this case, the existing first communication node 10 other than the own node should control the destination discovering process. This is an important reason of detecting the existence of the first communication node other than the own node. Here, if the actually not discovered communication node is updated, the originating intention of the receiver is not reflected to the network. That is to say, the automatic updating node deprives the control authority of the destination discovering process from the first communication node 10 and confuses the destination discovered by the second communication node 20.

By the way, the automatic updating node with only the first communication node 10, i.e. when there was totally 1 communication node which can be the first communication node 10, neither the detection of the external environment by step S202 nor branch at step S204 was necessary and step S208 may be executed more than is necessary.

However, in case there are a plurality of communication nodes which can be the first communication nodes 10, in case each of the communication node executes step S208 more than is necessary as is conventionally done, competitions occur.

In the present invention, "updating" in step S208 is not constantly performed, but there is a feature that it works on the external environment (step S208 or step S212) by selectively switching (steps S204, S206 and S210) according to the detected external environment (step S202).

The destination discovering server 30 can store a plurality of the actual destinations (or intermediate information) corresponding to a certain quasi destination.

### (Correspondence to Priority)

Priority information can also be associated with each of the above mapping at the destination discovering server 30.

In this case, the updating performed with the mapping with lower priority than the top priority is called preliminary updating because it is normal to ignore the next or later mapping if the actual destination corresponding to the top priority mapping is able to be correctly communicated. Thus, when it is not updated in step S212, the preliminary updating may be included.

### (Correspondence to a Service Identifier)

In addition, types of the applications (also called service and others) used in the real communications following the destination discoveries are associated with each of the mapping instead of the priority information (with /), which can be stored in the destination discovering server 30. In these cases, it may be updated in the applications.

### (Detecting Method of the External Environment)

In order to detect whether any first communication node 10 other than the own node exist or not, each of the communication node which can be the first communication node 10 may follow the normal destination discovering process from the same position as the second communication node 20. That is to say, the method for discovering the destination is same in the first and the second systems.

The communication node which can be the first communication node 10 should be implemented including the destination discovery, the detection of the external environment and updating corresponding to the kind of destination discovering server 30.

In case there is something which provide presence, the communication node which can be the first communication node 10 may believe it as well as the second communication node 20. If not, connection is attempted.

In embodiment 2, a specific example in a case when reachability confirmation is used in a case when the network address is known.

### (Embodiment 2)

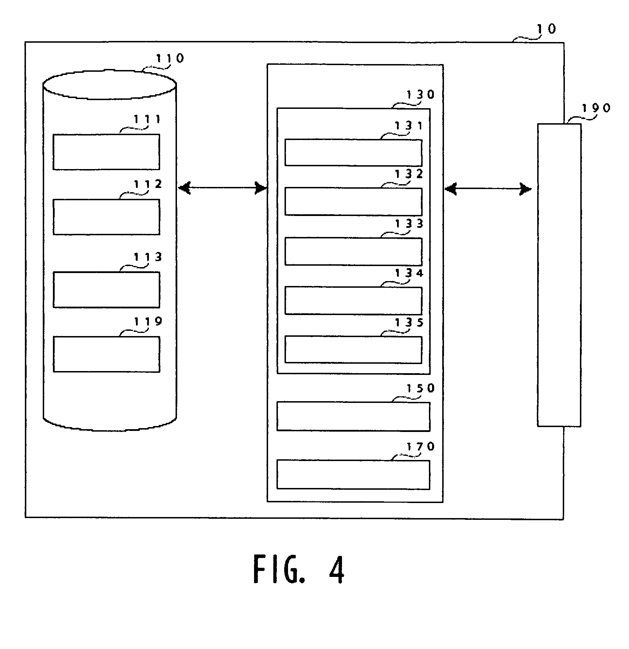

Fig. 4 is a block diagram showing the internal composition of the communication node which can be the first communication node 10. The storage device 110 including a temporary storage for working, the external environment detecting section 130, the switching section 150, the updating section 170 and a physical communication interface 190 for connecting to the network 40 are shown in Fig. 4.

The storage device 110 includes the static identifier storage section 111, a network address storage section 112 of the first communication node 10, an assigned present network address storage section 113 and the work area 119.

The static identifier storage section 111 stores the static identifiers as examples of the quasi destinations used by the second communication nodes 20 for discovering the first communication nodes 10.

The network address storage section 112 of the first communication node 10 stores the network address of the first communication node 10 which was able to be known as a result of query to the destination discovering server 30. That is to say, it stores the network address of the first communication node 10 shown by the destination discovering server 30.

The assigned present network address storage section 113 stores the network address assigned by the own node (or the network boundary in contact with the external network).

The work area 119 is a temporary storage for working.

The external environment detecting section 130 provides a network address acquiring section 131 for acquiring the network address of the first communication node 10 stored in the destination discovering server 30, a determining section 132 for determining whether the network address acquired at the network address acquiring section 131 and the network address assigned to the own node correspond with each other, a sign signal processing section 133 for generating and sending a sign signal to the network address acquired at the network address acquiring section 131 or receiving the sign signal, a countersign signal processing section 134 for receiving a countersign signal or generating and returning a countersign signal when receiving a sign signal sent from other communication nodes and a reachability confirmation section 135 for judging whether the returned countersign signal is due to the reach of the above sign signal to the desired communication node.

The switching section 150 judge and branches based on the detected result of the external environment section 130.

The switching section 150 switches on/off the updating section 170 based on the result of the branching.

The updating section 170 directly/indirectly updates the destination discovering server 30.

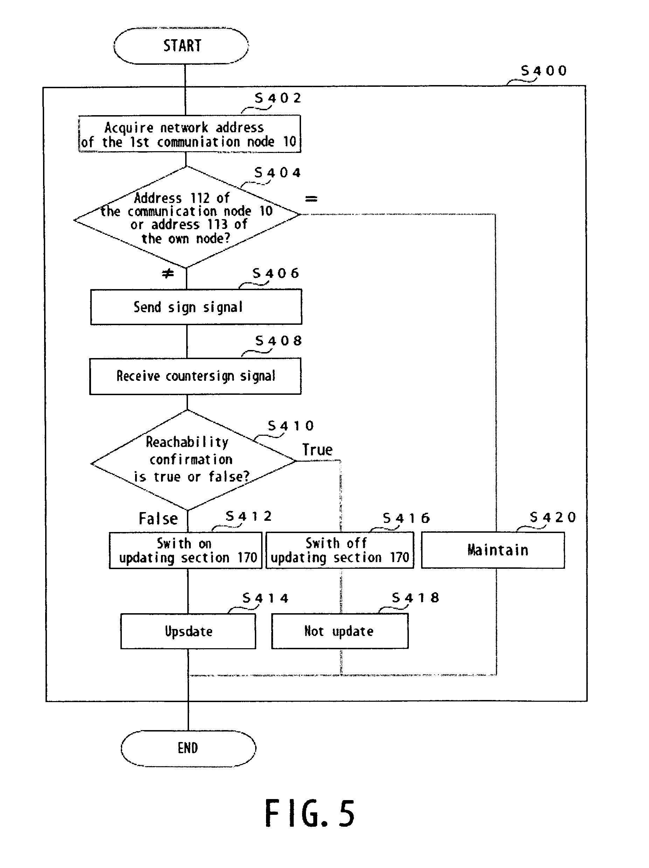

Fig. 5 is a flowchart showing the outline of the operation of the communication node which can be the first communication node 10 shown in Fig. 4.

In step S402,
a step where the communication node which can be the first communication node 10 performs query to the destination discovering server 30 or the network or requests connection to the first communication node 10 of the destination discovering server 30 or the network or
a step for knowing the actual destination from the response of the destination discovering server 30 or the network or attempting connection without knowing the actual destination may be included. The network address can be known in embodiment 2 as follows.

Step S402 is a step for the network address acquiring section 131 to perform query to the destination discovering server 30, and, to acquire the network address at that point which is the actual destination associated with the quasi destination used when the receiver discovers it as the destination from the result of this query. Naturally any kind of physical layer is available. Obtained addresses are stored in address storage 112 in the first communication node 10.

Step S404 is a step where the determining section 132 judges whether the network address of the first communication node 10 shown by the destination discovering server 30 stored in the network address storage section 112 of the first communication node 10 corresponds with the present network address assigned to the own node (or the network boundary in contact with the external network) stored in the assigned present network address storage section 113 or not. When these correspond with each other, the own node is the first communication node 10. In this case, it is branched to step S420. If they do not correspond with each other, it goes on to step S406.

In step S406, the network address stored in the network address storage section 112 of the first communication node 10 is read out and the sign signal processing section 133 sends a sign signal to said network address.

In step S408, the countersign signal processing section 134 receives a countersign signal corresponding to the above sent sign signal. The countersign signal may not be responded.

In step S410, the reachability confirmation section 135 judges true/false of its reachability from the above received countersign signal (or by not receiving the countersign signal). The first communication node 10 may receive the sign signal at the sign signal processing section 133 and the countersign signal processing section 134 may respond to the countersign signal. Here, in case the result of the reachability confirmation is true, it branches to step S416, and, in case it is false, it goes on to step S412. (Please refer to W02004/059925 on reachability confirmation.)

In step S412, the switching section 150 switches on the updating section 170.

In step S414, the updating section 170 updates the destination discovering server 30. That is to say, this is a case when the communication node works on the external environment. This case is a case when "the first communication node 10 does not exist", so the destination is turned to the own node by updating.

In step S416, the switching section 150 switches off the updating section 170.

Step S418 is a logical step clearly showing not updating. That is to say, this is the case when "the first communication node 10 exists other than the own node", which is the case when it does not work on the external environment. It has a feature that it does not control the destination discovering process which was conventionally performed without fail.

Step S402 to S404 judge whether or not "the address shown by the destination discovering server 30 matches the address of the own node".

Step S406 to S410 judge whether or not the first communication node10 has already existed.

In this embodiment, the reachability confirmation is used as means for detecting whether or not the first communication node 10 has already existed, but other means such as presence detection, authentication, and node identification may be used. Since those means are well-known, they will be briefly described hereinafter.

When the destination discovering server 30 (or presence server) provides the presence, presence detection may be used. In case of the presence detection, provisional participation to destination discovering process is also possible. When it is found that the first communication node 10 exists, but it is not known whether such node is the own node or not, provisional participation to destination discovering process is beneficial. The difference between the present invention and conventional technologies in presence is that in the present invention detail information about the first communication node 10 is unnecessary and detection of online/offline is only needed.

When actual connection is tried, authentication may be used instead of the above mentioned reachability confirmation. The authentication may be the same as one used in the destination discovering process. Of course, other authentication processes may be used.

Furthermore, if communication node which the receiver will recognize as the destination is registered beforehand in communication nodes which can be the first communication node 10, judgment may be made by matching the node with the registered one. In this way, external environment may be detected even if connection is tried without knowing addresses.

The external environment is detected from steps S402 to S410 described above.

Steps S412 to S420 show responses to the detected stimulation.

Steps S412 to S414 work on the external environment by the updating of the updating section 170.

Steps S416 to S418 negatively work on the external environment by not updating (i.e. these do not work on the external environment).

Step S420 merely maintains the present destination discovery.

### (Maintaining)

"Updating" and "maintaining" was treated same in embodiment 1, though these are considered as different processes here.

A table describing Note 2 in Table 1 in detail is shown below.

### (Table 2)

Response in cases when the own node is the first communication node 10 and the address of the own node is not changed is "maintain" in Table 2.

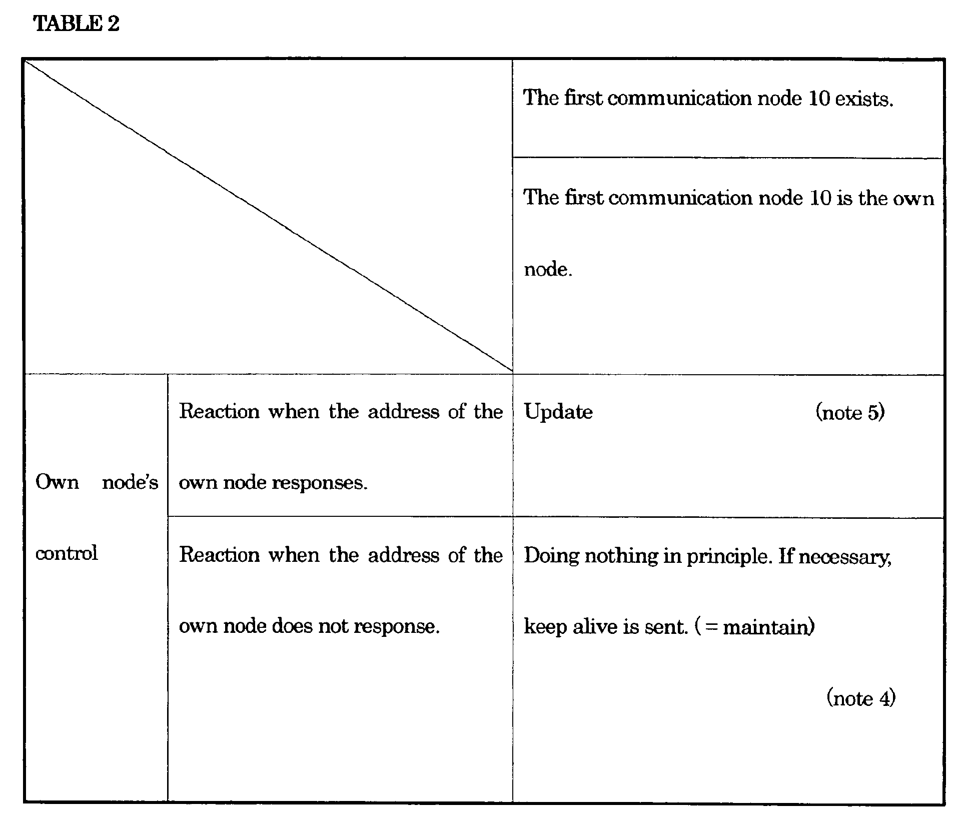

"Maintaining" can be read as "Doing nothing in principle. If necessary, keep alive is sent."

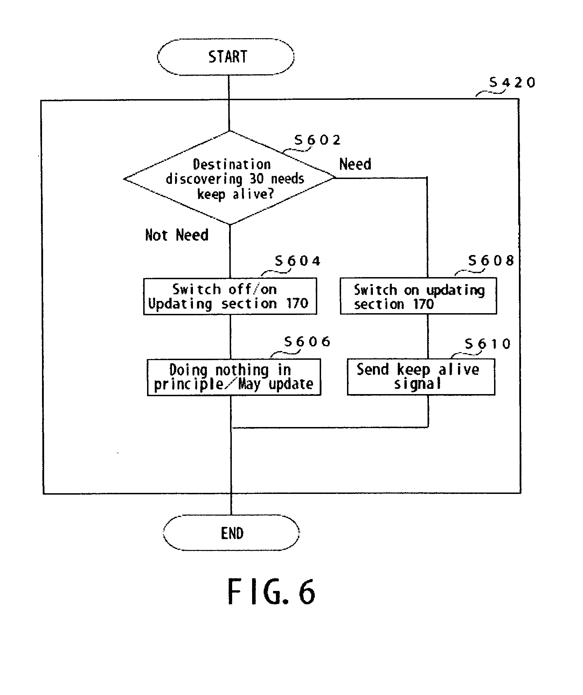

Note 4 in Table 2 is described using Fig. 6.

Fig. 6 is a flowchart showing a case of maintaining. It is an internal operation of step S420.

Step S602 judges whether the destination discovering server 30 is a type which needs keep alive or not. In case it needs keep alive, it branches to step S608. In case it does not need keep alive, it goes on to step S604.

In step S604, the switching section 150 switches on/off the updating section 170

In step S606, principally nothing is done (i.e. not updated) or it is updated according to S606. In case keep-alive is not needed, updating and not updating are the same. In case the communication node which the second communication node finds is the own node and the address is not changed, the destination discovering process does not change even if further updated.

In step S608, the switching section 150 switches on the updating section 170 for descriptive purposes.

In step S610, the updating section 170 sends keep alive signal to the destination discovering server 30.

Here, "for descriptive purposes" indicates that keep alive and updating are not distinguished in many cases in prior art and these are substantially the same operations. Consequently, keep alive sending section is not set in the present description and the updating section 170 is used as a substitute. Needless to say, a keep alive sending section may be set.

Usually it is known whether or not the address discovering server 30 needs keep alive before the address is found. Fig. 6 clearly shows comparison of a case when the destination discovering server 30 needs keep alive and a case when it does not need keep alive. In implementation, it does not branch at step S602 but it should be implemented corresponding to the type of the destination discovering server 30 (because the specific methods of updating are different.)

"Maintaining" has been described so far.

It also has been described that "maintaining" and "updating" are not clearly distinguished. However, only the change in clearly showing the actual destination associated with the quasi destination is originally desirable as updating, not maintaining the destination discovering process as it is. For example, the first communication node 10 discovered by the second communication node 20 is not changed, though in case the network address of the first communication node 10 changed, the destination discovering process is (at least) once lost sight of. This case is a case when the destination discovering process is returned to the first communication node 10 to which the receiver intends and other cases. Hereinafter, "updating" excluding "maintaining" will be described.

### (Network Address Change)

This is the case of Note 5 in Table 2. That is to say, the own node is the first communication node 10, which also indicates a case when the network address of the own node changed. This is a case equivalent to the conventional updating.

In case the first communication node 10 is single as has conventionally been, it may be updated more than is necessary in change of the network address of the own node.

When the network address of the own node which is the first communication node 10 changed, the destination discovery is temporarily lost sight of.

Thus, the case when the first communication node 10 does not exist may be detected.

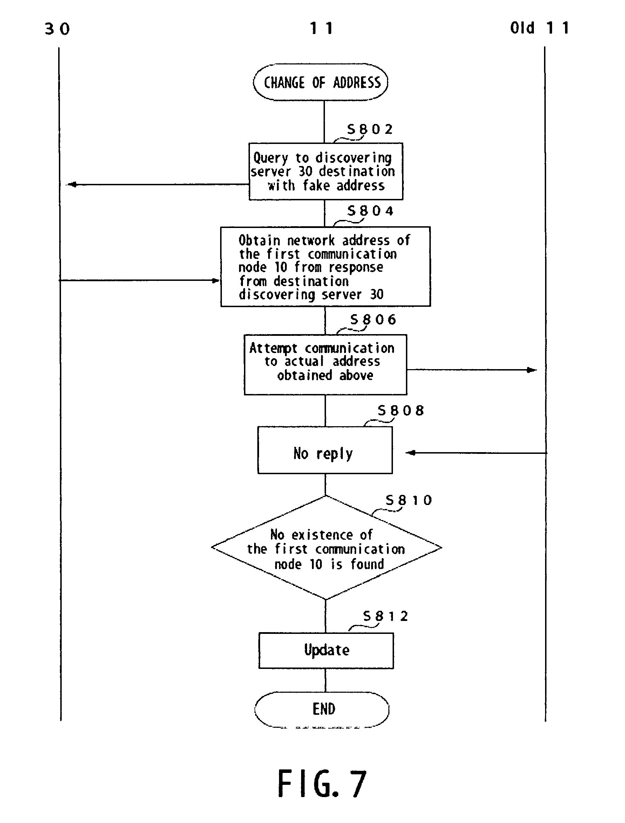

Fig. 7 shows how the first communication node 10 operates with a trigger of the change in the network address of the own node. In Fig. 7, the PC 11 is the first communication node 10 to which the receiver intended and the old PC 11 is the first communication node 10 which is the actual destination stored in the destination discovering server 30.

In step S802, the PC 11 performs query to the destination discovering server 30 with the quasi address.

In step S804, the network address of the first communication node 10 at that point is obtained from the response of the destination discovering server 30. However, the own node is the first communication node 10 and also the network address of the own node changed, so the destination discovering server 30 will naturally return the network address assigned to the own node before the change in network address in step S804. This is equivalent to a case when the own node is detected that it is not the first communication node 10 in step S404 in Fig. 5.

In step S806, a communication is attempted to the network address obtained in step S804 (i.e. the old network address).

In step S808, there is naturally no reply. Here, the second communication node 20 also loses sight of the first communication node 10. (The old network address is a network address which was used by the own node until then and the network address of the own node changed, so the communication node using the network address does not exist in principle.)

In step S810, from that there was no reply in step S808, it can be seen that the first communication node 10 does not exist. That is to say, it can be detected that there is no communication node using said network address. In addition, reachability confirmation may be used for detecting the case when an unrelated communication node is using said network address.

In step S812, the switching section 150 switches on the updating section 170 and the updating section 170 updates reflecting the change in the network address (step S414 in Fig. 5). In this way, the own node continues to be the first communication node 10.

A specific example of the external environment detection and, in case of maintaining, the change in the network address was described in embodiment 2.

From the above description, the nature of the present invention is in that cases when updating and not updating corresponding to the external environment was made by stimulation of the detection of the external environment, though the updating instruction was conventionally sent more than is necessary in automatic updating.

That is to say, corresponding to the external environment detected by the external environment detecting method, the present invention is characterized in that the communication node controls the detection discovering process.

### (Example Deformation)

From the above descriptions, in case the network address of the first communication node 10 does not change and the destination discovering server 30 does not need keep alive, updating is not necessary. If it does not make any difference, it is preferred not to be performed.

However, though it needs keep alive, there may be a destination discovering server 30 which does not expire. This case is considered that keep alive is unnecessary.

When this is reflected to the case in embodiment 2, updating is not performed in the case when the own node is the first communication node 10 and there is no change in the network address (S606 in Fig. 6) and in case when there is the first communication node 10 other than the own node (S418 in Fig. 5), so it is not updated in case the existence of the first communication node 10 is merely detected. Thus, in case keep alive is unnecessary, it is unnecessary to know that the own node is the first communication node 10 and the existence of the first communication node 10 may only be detected (i.e. it is not necessary to distinguish (a) and (b)). In case keep alive is unnecessary, "maintain" in Note 2 in Table 1 may be replaced by "not update".

In the example deformation, the block diagram is as same as Fig. 2.

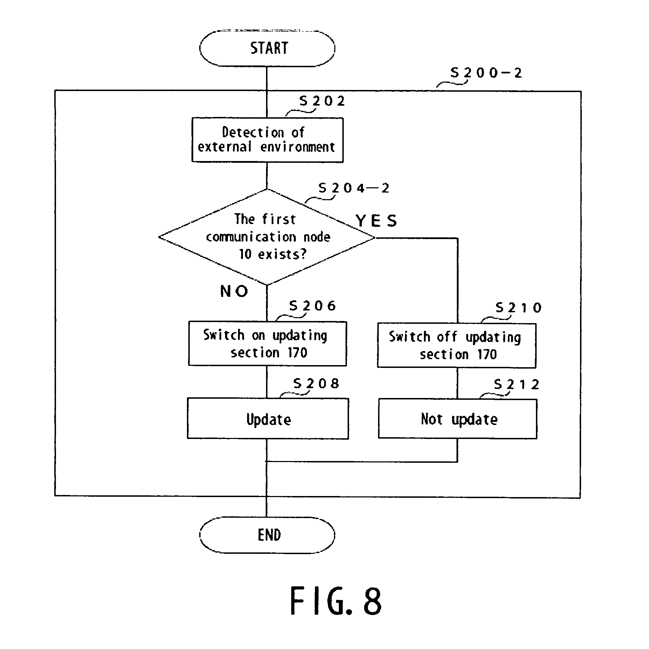

In Fig. 8, a deformed flowchart of embodiment 1 which is able to apply to a case when the destination discovering server 30 does not need keep alive.

In step S202, the external environment detecting section 130 detects the external environment for each of the communication node which can be first communication node 10.

In step S204-2, based on the detected result of the external environment by the external environment detecting section 130 in step S202, the switching section 150 judges and branches. That is to say, the switching section 150 judges whether the own node has the control authority of the destination discovering process or not.

In case when that "the first communication node 10 exists" is detected in step S204-2, it is branched to step S210. If not, it goes on to step S206.

In step S206, the switching section 150 switches on the updating section 170.

In step S208, the updating section 170 directly/indirectly updates the destination discovering server 30. That is to say, this is the case when the communication node works on the external environment. In case there is no first communication node 10, it is the same as embodiment 1 in that the own node is turned to the destination by updating. Unlike embodiment 1, in case the own node is the first communication node 10, it is excluded in S204-2. That is to say, there is no case of maintaining.

In step S210, the switching section 150 switches off the updating section 170.

Step S212 is a logical step clearly showing not updating.

Embodiment 1 can be applied to cases when keep alive is necessary/unnecessary.

The example deformation can be applied to cases when keep alive is unnecessary.

### (Entire Sequence)

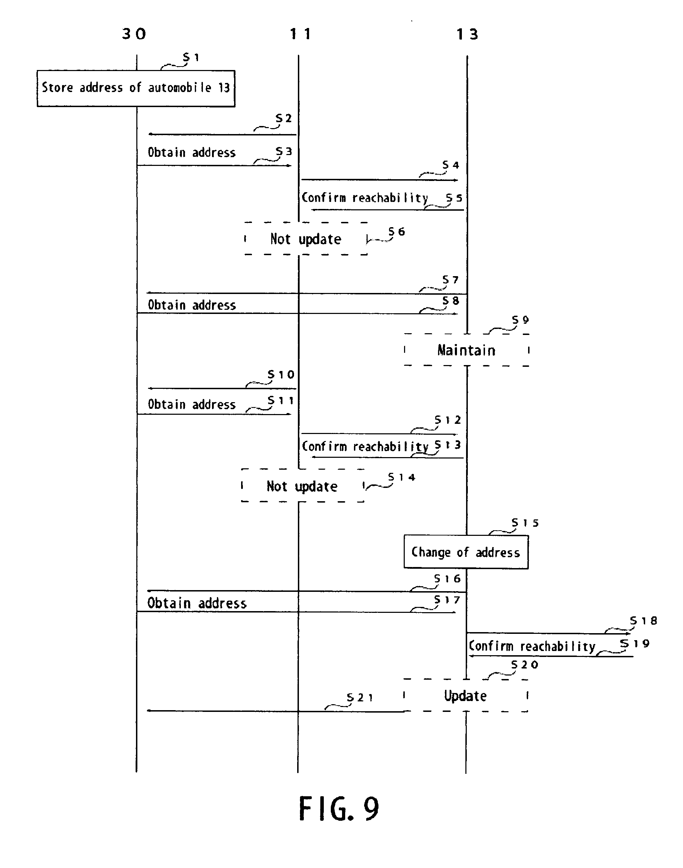

Fig. 9 is a time chart where the operations among the PC 11 which is the communication node which can be the first communication node 10, an automobile 13 and the destination discovering server 30.

Refer to embodiment 2 on the operation of each of the communication node.

The network address of the first communication node 10 stored in the destination discovering server 30 at the starting point of the time chart is the network address of the automobile 13 (step S1).

The PC 11 performs a network address acquiring processing to the destination discovering server 30 in the procedure described in step S402 in Fig. 5 at a predetermined timing. (steps S2 and S3)

The network address of the first communication node 10 stored in the destination discovering server 30 is the network address of the automobile 13, so the PC 11 acquires the network address of the automobile 13. In this case, the PC 11 determines that the acquired network address and the present network address of the own node do not correspond (step S404 in Fig. 5) and performs reachability confirmation by sending a sign signal to the acquired network address, i.e. the network address of the automobile 13 (steps S4 and S5, steps S406 to S410 in Fig. 5).

Here, unless any interruptions occur such that the automobile 13 is not operating normally, the desired reachability confirmation result can be obtained. Consequently, it can be known that there is the first communication node 10 other than the own node, so the PC 11 does not update the destination discovering server 30. (step S6, steps S416 to S418 in Fig. 5)

Then, the network address acquiring processing is similarly performed on the automobile 13 side (steps S7 and S8). However, in this case, the automobile 13 determines that the acquired network address and the present network address of the own node is correspondent (step S404 in Fig. 5), so it maintains the destination discovery at that point (step S9, step S420 in Fig. 5). In addition, keep alive signal not shown in the figures may be sent (step S610 in Fig. 6) at this timing.

Then, processing similar to steps S2 to S6 is repeated (steps S10 to S14).

Then, the network address assigned to the automobile 13 changes (step S15).

However, the destination discovering server 30 still stores the network address of the automobile 13 in the past. Even if the automobile 13 performs the network address acquiring process in this condition (step S16 and S17), the automobile 13 acquires the network address of the own node in the past and compares the network address in the past and the present network address of the own node. In this way, the both addresses are determined not to be correspondent to each other (step S404 in Fig. 5). Therefore, the automobile 13 performs reachability confirmation to the network address of the own node in the past (step S18 and S19, steps S406 to S410 in Fig. 5). The automobile 13 already does not use the network address in the past, so it can not obtain the desired result of the reachability confirmation. Consequently, the automobile 13 updates the destination discovering server 30 (steps S20 and S21, steps S412 to S414 in Fig. 5).

As described above, according to the present embodiment, one is able to communicate hopping the communication node alternatively discovering the PC 11, the PC 12, and the automobile 13 as the destinations.

### (System)

The entire communication systems is shown below.

The second communication node 20 used by the originator who intends to start a communication,
the first communication node 10 used by the receiver and
the destination discovering server storing mapping of the quasi destination and
the actual destination are connected through the network 40, and,
when the second communication node 20 intended to communicate with the first communication node 10,
in case when the second communication node 20 performs query to the destination discovering server 30 or to the network 40 for the quasi destination, or, requests connection to the network 40, and
knows the actual destination from the response of the destination discovering server 30, or attempts connection without knowing the actual destination, and,
the destination comprises the group of communication nodes which can be the first communication nodes 10,
the system for making the second communication node 20 to discover the communication node specified by the receiver as the destination,
by 1 communication node which can be the first communication node 10 updating the own node as the actual destination corresponding to the quasi destination for the destination discovering server 30 and
the communication nodes other than the above communication nodes which does not update the actual destination corresponding to the quasi destination in case there are more than 2 communication nodes which can be the first communication nodes 10.

### (Example Application)

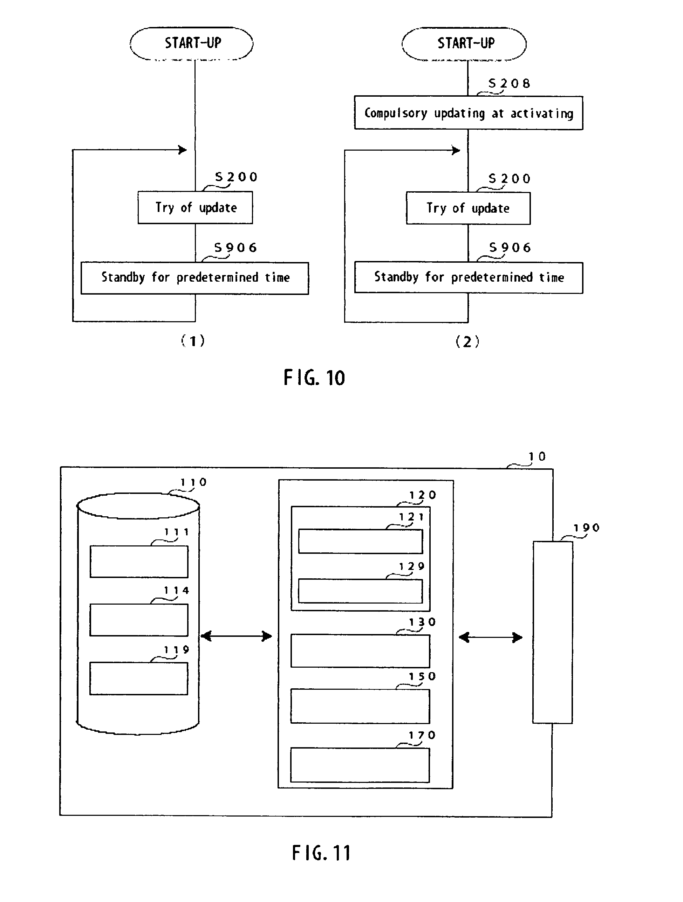

A flowchart in case the present invention is automated is shown in Fig. 10.

Fig. 10 (1) should be compared with the start of the conventional automatic updating program.

An example of a new automatic updating is described below. A new automatic updating is made by continuing updating attempts. Start-up may be either a start-up of the communication node or a start of an updating attempt.

Embodiment 1 as a whole (i.e. step S200) switches on/off the switching section 170 corresponding to the detected external environment, so it is previously unclear whether it will be updated or not as a result, which is different from the conventional automatic updating. From this feature, embodiment 1 as a whole is called an "updating attempt". Embodiment 1 as a whole may be replaced by embodiment 2 as a whole (i.e. step S400) or example deformation as a whole (i.e. step S200-2).

In step S906, passage of a predetermined time is kept by a timer. After standing by for a predetermined time, it is looped to the updating attempt. As a result, the updating attempt is continued as a whole. This is an example of the new automatic updating. In case the destination discovering server 30 needs keep alive, the predetermined time is limited by the expire time of the determination discovering server 30. In addition, instead of step S906, updating may be attempted with a trigger of detecting change in the network address of the own node not shown in the figures which was conventionally performed.

In case there is already the first communication node 10 which is not the own node, even if updating is attempted, the communication node actually not discovered as the destination but can be discovered in the future will not deprive the actually discovered communication node of the destination discovery different from the conventional automatic updating.

In this way, in case the communication node which can be the first communication node 10 comprises a single communication node (i.e. in case the constituent of the group is 1), communication nodes are always able to be added behind the first communication node 10.

The communication nodes added behind remain the communication nodes which can be the first communication nodes 10. That is to say, they will not be the actually discovered communication nodes merely by adding.

In addition, after it once becomes the first communication node 10 (the actually discovered communication node), the position as the first communication node 10 is maintained. Here, the communication node actually not discovered never controls the destination discovering process violating the control authority which the first communication node 10 originally has. Therefore, the originating intention of the receiver is reflected to the network.

That is to say, among the communication nodes which can be the first communication nodes 10, the communication nodes which the receiver intended can be discovered by the second communication node 20.

By the way, automatic updating has conventionally been started at the start-up of the communication node. Conventionally, the communication node has been updated without fail regardless of the external environment. That is to say, in case the first communication node 10 exists, the communication added afterward will deprive the first communication node 10 of the position to be discovered as the destination. This can be used for reflection of the originating intention of the receiver. That is to say, it will be as shown in Fig. 10 (2).

In Fig. 10 (2), the conventional updating is executed before attempting updating. That is to say, it is forced to update at start-up.

These operations by the communication nodes can be realized by start-up options and others. It is forced to be updated at start-up, i.e. to turn the destination discovery to the own node, and then switched to the execution of the updating attempt by saving the start-up setting (for example, setting of the operation when the source of the communication node is on) where the start-up options are previously specified.

Fig. 11 shows a block diagram in case (1) and (2) in Fig. 10 are enabled to be switched and executed.

Fig. 11 is a block diagram showing the internal composition of the communication node which can be the first communication node 10 shown in Fig. 1. In Fig. 11, an operation control section 120 is added to the block diagram shown in Fig. 2. In addition, a start-up option storage section 114 is added to the storage section 110.

The start-up option storage section 114 stores the value instructing the operation at start-up. Said value may be delivered from outside.

The operation control section 120 includes an initial operation determining section 121 and a timer 129.

The initial operation determining section 121 reads out the start-up options from the start-up option storage section 114 and determines the initial operation.

The timer 129 controls the operation timing.

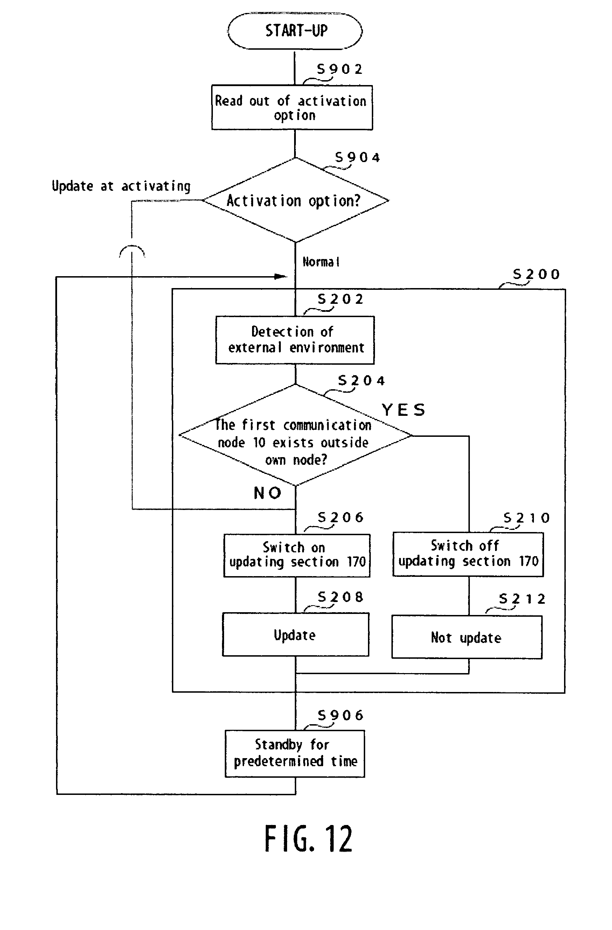

Fig. 12 is a flowchart showing the outline of the operation of the communication node which can be the first communication node 10 in case the updating attempt is maintained.

In step S902, the initial operation determining section 121 reads out the start-up options from the start-up option storage section 114.

In step S904, the initial operation determining section 121 judges the content of the start-up options. If the content of the start-up options are normal or if there are no options, it goes on to step S202.

The case it goes on to S202 is omitted here because it is same as embodiment 1. Only the changes are described below.

The case branching to step S206 is also as same as embodiment 1, though the reason why it is branched to step S206 instead of step S208 is added here. The concept of on/off of the updating section 170 did not exist in the conventional automatic updating, so it might just be updated more than is necessary, though on/off of the updating section 170 is switched in the present invention, so switching on is clearly shown here.

Then, after standing by for a predetermined time (step S906), it loops to the head of step S200, i.e. step 202 as has already been described in Fig. 10.

The case shown in Fig. 10 (2) when it is forced to update at start-up is useful in automobiles and others.

### Industrial Applicability

### (Practical Application)

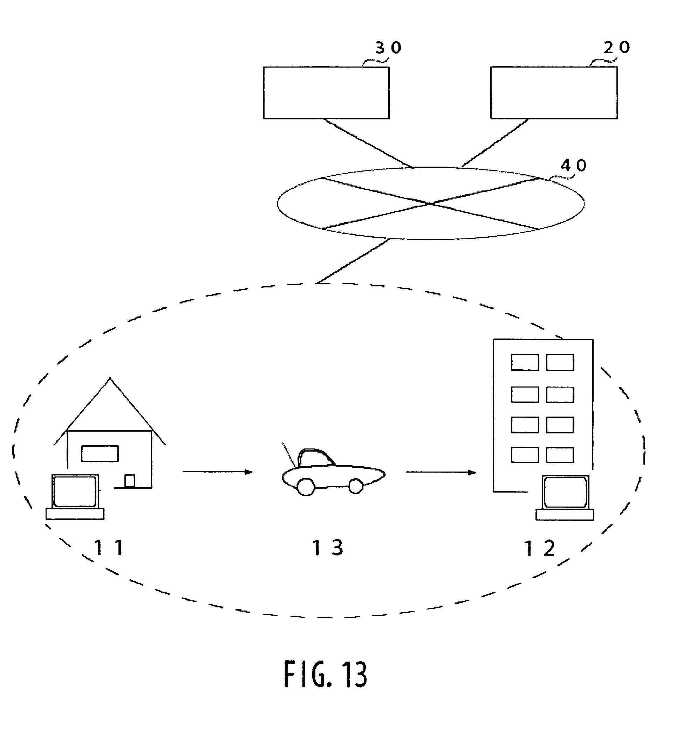

Fig. 13 is a explanatory diagram showing a practical application of the present invention. Here, an user of the first communication node 10 discovers the PC 11, the PC 12 and the automobile 13 which are the own nodes as the first communication nodes 10 and actually goes from one to another.

The PC 11 is set at home and the PC 12 is set at company. The source of the PC 12 is turned on on Monday and turned off on Friday.

Here, an example of Mr. Mojo going from home to his company one morning is taken as an example.

After eating breakfast and checking the messages in the morning, Mr. Mojo instructs the PC 11 to end and goes to his company by his automobile.

Here, instructing the PC 11 to end is equivalent to a clearly shown originating intention for preventing the communication node from existing in the network.

After getting into the automobile 13, Mr. Mojo will naturally start the engine.

There is an originating intention in starting the engine. The automobile 13 may be composed to perform the forced updating at start-up (Fig. 10 (2)) explained in the example application. Here, even if the PC 11 at home is still in the ending processing and remaining as the first communication node 10, the start-up of the communication node and the manual updating turning the destination discovery based on it to the own node (in this case, the automobile 13) are automatically performed by said forced updating.

When Mr. Mojo reaches his company, he gets out of the automobile 13 and goes to his desk in his company. Here, if the engine of the automobile 13 is turned off, this is also equivalent to the clearly shown originating intention for preventing the communication node from existing in the network.

Here, if the source of the PC 12 at his company is remained on and the updating attempt described in the present invention is continued, the PC 12 turns the destination discovery to itself because non-existence of the first communication node 10 is detected because the automobile 13 does not exist in the network. After this, the communication node discovered as the destination will be the PC 12.

Just in case power discontinuity of the PC 11 by Mr. Mojo in the morning is early, the destination discovery can move to the PC 12 at his company. However, in this case, the destination will be the automobile 13 when Mr. Mojo turns on the engine of the automobile 13 from the above descriptions, so it can be known that it correctly follows the movement of persons among the communication nodes and the destination discovery is performed.

When Mr. Mojo is at his company, even if his family turns on the source of the PC 11 at home, in case the updating attempt is continued without any forced updating after the PC 11 was started up as described in the example application (Fig. 10 (1)), the PC 12 at his company can continuously be discovered as the destination and the PC 11 at home will never derive the PC 12 at his company of the destination discovery.

In this way, one can go from one to another hopping the communication node while discovering the communication node intended by the receiver as the destination.

### Explanation of reference numerals

10 first communication node
   110 storage device
      111 static identifier storage section
      112 network address storage section of the first communication node (shown by the destination discovering server)
      113 assigned present network address storage section
      114 start-up option storage section
      119 work area
   120 operation control section
      121 initial operation determining section
      129 timer
   130 external environment detecting section
      131 network address acquiring section
      132 judging section
      133 sign signal processing section
      134 countersign signal processing section
      135 reachability confirmation section
   150 switching section
   170 updating section
   190 interface
20 second communication node
30 destination discovering server
40 network

## Claims

1. A communication node which can be found as a destination, wherein destination discovering process is controlled based on an external environment detected by an external environment detecting section for a destination discovering server providing an originator communication node with the destination discovering process.

2. A program executed by a communication node which can be found as a destination, wherein destination discovering process is executed by a communication node based on an external environment detected by an external environment detecting section for a destination discovering server providing an originator communication node with the destination discovering process.

3. A communication node which can be found as a destination, wherein a switching section controls on/off of an updating section based on an external environment detected by an external environment detecting section for a destination discovering server providing an originator communication node with the destination discovering process.

4. A program executed by a communication node which can be found as a destination, wherein a switching section controls makes a communication node to execute a step for controlling on/off of an updating section based on an external environment detected by an external environment detecting section for a destination discovering server providing an originator communication node with the destination discovering process.

5. A communication node which can be found as a destination, wherein an external environment detecting section detects existence of a communication node found by a quasi destination and a switching section controls makes a communication node to execute a step for controlling on/off of an updating section based on the result of said detecting for a destination discovering server providing an originator communication node with the destination discovering process.

6. A program executed by a communication node which can be found as a destination, wherein an external environment detecting section detects existence of a communication node found by a quasi destination and a switching section controls makes a communication node to execute a step for controlling on/off of an updating section based on an external environment detected by an external environment detecting section for a destination discovering server providing an originator communication node with the destination discovering process.

7. The communication node as claimed in any of Claim 1, 3 or 5,
wherein the updating section controls the destination discovering process at activating before detecting the external environment.

8. The communication node as claimed in any of Claim 1, 3, 5 or 7,
wherein based on option at activating, it is switched to a case where the updating section controls the destination discovering process before detecting the external environment, or a case where the external environment detecting section decides whether or not the destination discovering process should be controlled based on the detected external environment.

9. A communication system wherein an originator communication node used by an originator who starts a communication, a destination communication node used by a receiver, and a destination discovering server where mapping between a quasi address and an actual address is stored, are connected via a network,
wherein when a user of the originator communication node wishes communication with a user of the destination communication node, the originator communication node inquires the quasi address of the address discovering server or the network, or requests connection to the address discovering server or the network,
wherein under situation where the actual address is known by a response from the destination discovering server or the network, or the actual address is not known,
when the address comprise a group comprising communication nodes which can be one or more destinations, the communication node which can be one actual destination registers its own node as the actual address corresponding to the quasi address on the address discovering server, and
when more than one communication nodes which can be discovered as the destination exist, a communication node outside said communication node does not register its own node as the actual address corresponding to the quasi address so that the communication node which the receiver designates is discovered as the address by the originator communication node.

10. The destination discovering server used for the communication system claimed in Claim9.

11. A destination discovering server wherein mapping between a quasi address of an address communication node and an actual address is registered, and said destination communication node corresponds to control of a destination discovering process executed based on an external environment.

12. A communication system wherein an originator communication node used by an originator who starts a communication, a destination communication node used by a receiver, and a destination discovering server where mapping between a quasi address and an actual address is stored, are connected via a network,
wherein said originator communication node originates to the actual destination communication node corresponding to said quasi address after inquiring the quasi address to said address discovering server or requesting connection to the network, and
wherein the communication node which can be a destination receives or waits to receive said communication under a situation where said actual destination communication node is connected, and
wherein other communication node which can be the destination does neither receive nor wait to receive said connection when an actual address communication node receives or waits to receive said communication.

13. A communication system wherein an originator communication node used by an originator who starts a communication, a destination communication node used by a receiver, and a destination discovering server where mapping between a quasi address and an actual address is stored, are connected via a network,
wherein said originator communication node originates to the actual destination communication node corresponding to said quasi address after inquiring the quasi address to said address discovering server or requesting connection to the network, and
wherein the communication node which can be a destination receives or waits to receive said communication under a situation where said actual destination communication node is connected, and
wherein other communication node which can be the destination does neither receive nor wait to receive said connection when an actual address communication node receives or waits to receive said communication.
